(19) Europäisches Patentamt
European Patent Office
Office européen des brevets

(11) **EP 2 236 204 B1**

(12) **EUROPEAN PATENT SPECIFICATION**

(45) Date of publication and mention
of the grant of the patent:
**22.05.2019 Bulletin 2019/21**

(21) Application number: **08866954.4**

(22) Date of filing: **26.12.2008**

(51) Int Cl.:
*B01J 23/78* (2006.01)          *B01J 23/94* (2006.01)
*B01J 37/03* (2006.01)          *B01J 38/06* (2006.01)
*B01J 38/12* (2006.01)          *C01B 3/26* (2006.01)
*C01B 3/40* (2006.01)          *C10J 3/02* (2006.01)
*C10K 1/20* (2006.01)          *C10K 3/02* (2006.01)
*C01B 3/58* (2006.01)          *C10B 53/02* (2006.01)
*C10K 1/34* (2006.01)          *B01J 37/00* (2006.01)

(86) International application number:
**PCT/JP2008/073976**

(87) International publication number:
**WO 2009/084736 (09.07.2009 Gazette 2009/28)**

(54) **PROCESS FOR PRODUCTION OF CATALYST FOR USE IN THE REFORMING OF TAR-CONTAINING GAS, METHOD FOR REFORMING OF TAR, AND METHOD FOR REGENERATION OF CATALYST FOR USE IN THE REFORMING OF TAR-CONTAINING GAS**

VERFAHREN ZUR HERSTELLUNG EINES KATALYSATORS FÜR DIE VERWENDUNG BEI DER REFORMIERUNG VON TEERHALTIGEM GAS, VERFAHREN ZUR TEERREFORMIERUNG UND VERFAHRENS ZUR REGENERIERUNG VON KATALYSATOREN FÜR DIE VERWENDUNG BEI DER REFORMIERUNG VON TEERHALTIGEM GAS

PROCÉDÉ POUR LA PRODUCTION DE CATALYSEUR POUR UTILISATION DANS LE REFORMAGE DE GAZ CONTENANT DU GOUDRON, PROCÉDÉ DE REFORMAGE DE GOUDRON ET PROCÉDÉ DE RÉGÉNÉRATION DE CATALYSEUR POUR UTILISATION DANS LE REFORMAGE DE GAZ CONTENANT DU GOUDRON

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.12.2007 JP 2007337311**
**13.06.2008 JP 2008155887**
**24.09.2008 JP 2008244851**

(43) Date of publication of application:
**06.10.2010 Bulletin 2010/40**

(73) Proprietor: **Nippon Steel & Sumitomo Metal Corporation**
**Tokyo 100-8071 (JP)**

(72) Inventors:
• **SUZUKI, Kimihito**
**Tokyo 100-8071 (JP)**
• **FUJIMOTO, Ken-ichiro**
**Tokyo 100-8071 (JP)**

(74) Representative: **Vossius & Partner Patentanwälte Rechtsanwälte mbB**
**Siebertstrasse 3**
**81675 München (DE)**

(56) References cited:
**WO-A1-97/04870          JP-A- 2003 055 671**
**JP-A- 2003 055 671          JP-A- 2004 000 900**
**JP-A- 2004 000 900          JP-A- 2005 053 972**
**JP-A- 2007 229 548          JP-A- 2007 283 209**
**JP-A- 2007 283 209          US-A- 4 101 449**

• **MA L ET AL: "Integrated high temperature gas cleaning: Tar removal in biomass gasification with a catalytic filter", CATALYSIS TODAY, ELSEVIER, NL, vol. 105, no. 3-4, 15 August 2005 (2005-08-15), pages 729-734, XP027834629, ISSN: 0920-5861 [retrieved on 2005-08-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a production method of a reforming catalyst that reforms a high-temperature tar-containing gas generated upon pyrolysis of a carbonaceous raw material and converts it into a gas mainly containing hydrogen, carbon monoxide and methane; a tar gasification method using the catalyst; and a regeneration method when the tar-containing gas reforming catalyst is deteriorated.

BACKGROUND ART

The iron steel industry is a large energy-consuming industry and the energy consumed therein accounts for about 10% of the total energy consumption of our country, nevertheless, about 40% of the integrated ironmaking process in a blast furnace method produces unutilized waste heat. Out of the waste heat, sensible heat of high-temperature unpurified COG (coke oven gas, hereinafter referred to as "crude COG") generated from the coke oven is a heat source that is easy to recover, but is not conventionally utilized. Regarding the technique for recovering sensible heat of the crude COG, a method of indirect heat recovery has heretofore been proposed in Kokoku (Japanese Examined Patent Publication) No. 59-44346 and Kokai (Japanese Unexamined Patent Publication) No. 58-76487, where a heat transfer pipe is provided in the inside of an ascending pipe of the coke oven or between an ascending pipe and a collecting main pipe and a heating medium is circulated and flowed inside of the heat transfer pipe to recover the sensible heat. However, in such a method, tar, light oil or the like associated with generated COG attaches to or undergoes carbonization/aggregation on the outer surface of the heat transfer pipe, which allows progress of densification and inevitably brings about a problem such as reduction in the heat transfer efficiency with aging or reduction in the heat exchange efficiency. As for the method to solve such a problem, Kokai No. 8-134456  discloses a method of coating a catalyst such as crystalline aluminosilicate or crystalline silica on the outer surface of the heat transfer pipe and cracking the deposit such as tar into a low molecular weight hydrocarbon through the catalyst, thereby stably maintaining the heat transfer efficiency. However, this method is no more than the indirect heat recovery technique for crude COG sensible heat. It is not taken into consideration whether a cracking product of heavy hydrocarbon such as tar becomes a light hydrocarbon easy to utilize as a gas fuel or the like. Furthermore, the effect on the deterioration of cracking activity with aging by a catalyst-poisoning sulfur compound component such as high-concentration hydrogen sulfide contained in the crude COG is also not studied.

On the other hand, a so-called conversion technique of heat energy to chemical energy, where heat energy undergoing great change in quality according to temperature is converted into chemical energy, a composite system of gas turbine combined cycle (GTCC) power generation and another plant has been proposed. For example, there are found a combination with oxygen production utilizing a high-temperature oxygen-transporting solid electrolyte (see, U.S. Patent 5,516,359), and natural gas reforming with water vapor/hydrogen production by utilizing sensible heat of an exhaust gas at the gas turbine outlet and its utilization as a fuel (see, Kokai No. 2000-54852). In either technique, air or natural gas is caused to act with the mediation of a functional material, i.e., solid electrolyte or catalyst, and converted into chemical energy, i.e., oxygen or hydrogen.

A technique of introducing a chemical reaction into a reactive gas produced at a high temperature, in the presence of a catalyst by utilizing the sensible heat of the reactive gas and converting the gas into chemical energy is almost unknown. Conventionally, sensible heat of a high-temperature gas is indirectly recovered or not utilized at all and in most cases, a cooled gas is subjected to various treatments and then utilized. Here, even though crude COG has sensible heat, because of the sulfur compound content exceeding 2,000 ppm and in view of the catalyst reaction design regarding the cracking reaction of heavy hydrocarbon such as tar, realization of its utilization is considered to be very difficult and although, as described in Kokai No. 2003-55671, studies have been heretofore made on $Ni_xMg_{1-x}O$-$SiO_2$ spray-dried solid solution catalyst, $Ni/Al_2O_3$, activated $Al_2O_3$, $Fe/Al_2O_3$ and the like, the reforming activity is not sufficiently high. An energy conversion catalyst is generally produced by a loading method of externally loading an active metal species on a porous ceramic support such as silica or alumina, but in this method, the metal component supported can not be readily increased in its dispersibility, and is also susceptible to sulfur poisoning or carbon deposition and therefore, it is difficult to produce a catalyst suitable for the cracking reaction of tar based mainly on a condensed polycyclic aromatic compound that is liable to cause carbon deposition in the above-described high-concentration sulfur compound-containing atmosphere. Furthermore, when the catalyst once reacted and deteriorated in the performance is subjected to combustion for regeneration, sintering (coarsening) of metal particles supported readily occurs and reproduction of activity by the regeneration is also difficult to realize.

Other than the loading method, there are known a method of mixing silica or alumina with a nickel-magnesia compound as a binder and producing a hydrocarbon reforming catalyst by a spray-drying method as described in Kokai No. 2003-55671, and a method of producing a hydrocarbon reforming catalyst by physically mixing a silica or alumina powder with a nickel-magnesia-based compound as described in Kokai No. 2004-00900, but in the method of physically mixing a nickel-magnesia compound powder and a silica or alumina powder and shaping and firing the mixture, the strength of the final product is weak and is not in a practically durable level.

On the other hand, as for the production method of an oxide containing nickel, magnesium and aluminum, a material obtained by preparing a precipitate (mainly forming a hydrotalcite structure) with use of a precipitant from an aqueous solution having dissolved therein various metal components and firing the precipitate is described, for example, in F. Basile et al., Stud. Surf. Sci. Catal., Vol. 119 (1998) and Kokai No. 50-4001, but the reforming activity is insufficient and the amount of carbon deposit is large, leaving a problem that must be solved for practical use.

Furthermore, in connection with the recent problem of global warming, utilization of biomass that is one of carbonaceous raw materials is attracting attention as effective means for the reduction of carbon dioxide emissions, and high-efficiency energy conversion of the biomass is being studied in many laboratories. In view of the recent trend to secure energy resources, the effective utilization of coal, that was aggressively studied in the past, is being reviewed toward the practical use. Out of these studies, as for the method of gasifying tar produced in the dry distillation of biomass to produce a crude gas (unpurified gas) and utilizing the sensible heat of the gas, various studies focused particularly on the catalytic reforming of tar by using a catalyst are being made, including the method using an $Rh/CeO_2$-based catalyst described in Kokai No. 2005-53972, but similarly to the cracking reaction of the above-described coal-derived tar, the results are not necessarily satisfied in view of catalytic activity and catalyst regeneration.

JP 2007 283209 relates to a gasification catalyst comprising a complex of: at least one selected from nickel sulfate, nickel acetate, and nickel carbonate; magnesium materials; and calcium materials, characterized in that: the complex comprises at least one of tungsten salt, cobalt salt, and molybdenum salt; the complex comprises 5 - 30wt% of nickel; and nickel component and at least one of tungsten component, cobalt component and molybdenum component are highly dispersed on the surface of the complex.

DISCLOSURE OF THE INVENTION

The present invention has been made by focusing attention on the sensible heat of a crude (unpurified) gas generated at the pyrolysis of a carbonaceous raw material such as coal and biomass, and an object of the present invention is to provide a production method of a reforming catalyst that is used in the treatment of a crude gas for chemical energy conversion including conversion into light chemicals in the presence of the catalyst by utilizing the high chemical reaction activity of high-temperature tar contained in or associated with a crude gas and further conversion into a fuel constitution mainly containing methane, carbon monoxide, hydrogen and the like and particularly, that exhibits high performance even for a tar-containing gas containing high-concentration hydrogen sulfide, such as crude COG, and a tar reforming method; and also provide a production method of a high-strength reforming catalyst durable in practical use, and a tar reforming method.

Another object of the present invention is to provide a regeneration method of a catalyst for tar gasification, where an oxidative atmosphere is created by introducing water vapor or air and provided to a catalyst of the invention deteriorated with the progress of a gasification reaction using the catalyst so as to remove the deposited carbon or adsorbed sulfur on the catalyst and the catalytic activity is thereby recovered to enable stable operation.

The present inventors have designed a catalyst by focusing attention on the elements constituting the catalyst and the composition and after intensive studies on the production method thereof, turned their attention to a solid-phase crystallization method having various characteristic features, for example, unlike the conventional loading method, the active species metal as a catalyst for converting tar contained in or associated with a crude gas at the pyrolysis of a carbonaceous raw material into light chemical substances mainly including methane, carbon monoxide, hydrogen and the like can be finely deposited to enable a high-speed reaction, the deposited active metal is firmly bonded to the matrix (host phase) to make difficult the progress of sintering (coarsening) and enable suppressing the reduction of activity, and the deposited active metal species can be again solid-dissolved in the matrix by firing to enable reproduction capable of suppressing sintering. As a result, the present inventors have formed a production method of previously forming a nickel element as an active species into a compound thereof with magnesia, alumina or the like, which are to become the matrix, where, by making use of the property that a nickel metal is finely deposited like a cluster on an oxide surface by a reduction treatment before reaction, a heavy hydrocarbon can be converted into light chemicals such as methane, carbon monoxide and hydrogen in an atmosphere containing a high concentration of a sulfur component which probably gives rise to sulfur poisoning, even under severe conditions where a component readily causing carbon deposition, such as heavy hydrocarbon (e.g., tar), is contained in a large amount, because the active metal has a large surface area and even when the active metal is subject to sulfur poisoning, a new active metal can be deposited.

When a precipitate of nickel and magnesium is produced, dried, fired and then mixed with an alumina sol and the mixture is subjected to drying and firing or to drying, calcination, shaping and firing, this is found to be a production method ensuring high strength of the final product.

The characteristic features thereof are set forth below.

(1) A production method of a tar-containing gas reforming catalyst, comprising:

adding a precipitant to a solution containing a nickel compound and a magnesium compound to co-precipitate nickel and magnesium and produce a precipitate,
drying and firing the precipitate to produce oxides of nickel and magnesium,
adding and mixing (a) an alumina powder and water or (b) an alumina sol to the oxides to produce a mixture, and
at least drying and firing the mixture to produce the catalyst.

(2) The production method of a tar-containing gas reforming catalyst as described in (1), wherein the catalyst is produced by subjecting the mixture (i) to drying and firing or (ii) to drying, calcination, grinding, shaping and firing.

(3) The production method of a tar-containing gas reforming catalyst as described in (1) or (2), wherein the catalyst is produced such that the produced tar-containing gas reforming catalyst has a nickel content of 1 to 50 mass%, a magnesium content of 5 to 45 mass% and an alumina content of 20 to 80 mass%.

(4) The production method of a tar-containing gas reforming catalyst as described in (1) or (2), wherein the catalyst is produced such that the produced tar-containing gas reforming catalyst has a nickel content of 1 to 35 mass%, a magnesium content of 10 to 25 mass% and an alumina content of 20 to 80 mass%.

(5) A method comprising the steps of producing a tar-containing gas reforming catalyst according to the production method described in any one of (1) to (4) and reforming tar-containing gas using the tar-containing gas reforming catalyst.

(6) The tar-containing gas reforming method as described in (5), wherein reforming the tar-containing gas is conducted in the presence of the tar-containing gas reforming catalyst or in the presence of the catalyst after reduction, hydrogen, carbon dioxide and water vapor in a tar-containing gas generated at the pyrolysis of a carbonaceous raw material is put into contact with the tar in the tar-containing gas to thereby reform and gasify the tar.

(7) The tar-containing gas reforming method as described in (5) or (6), wherein the tar-containing gas generated at the pyrolysis is put into contact with at least one of hydrogen, carbon dioxide and water vapor introduced from the outside to thereby reform and gasify the tar-containing gas.

(8) The tar-containing gas reforming method as described in any one of (5) to (7), wherein the tar-containing gas is a tar-containing gas containing 20 ppm or more of hydrogen sulfide.

(9) The tar-containing gas reforming method as described in any one of (5) to (8), wherein at least one of the hydrogen, carbon dioxide and water vapor is further added with an oxygen-containing gas and brought into contact with the tar-containing gas.

(10) The tar-containing gas reforming method as described in any one of (5) to (9), wherein the tar-containing gas is a dry distillation gas generated when dry-distilling coal.

(11) The tar-containing gas reforming method as described in any one of (5) to (9), wherein the tar-containing gas is a coke oven gas exhausted from a coke oven.

(12) The tar-containing gas reforming method as described in any one of (5) to (9), wherein the tar-containing gas is a dry distillation gas when dry-distilling at least either one of wood-based biomass and food waste-based biomass.

(13) The tar-containing gas reforming method as described in any one of (5) to (12), wherein the tar-containing gas is contacted with the tar-containing gas reforming catalyst at 600 to 1,000°C.

(14) A regeneration method of a tar-containing gas reforming catalyst, wherein when the tar-containing gas reforming method described in any one of (5) to (13) is practiced and the catalyst undergoes performance degradation by at least either one of carbon deposition and sulfur poisoning, the catalyst is brought into contact with at least either one of water vapor and air to regenerate the catalyst.

According to the present invention, a highly active reforming catalyst, which is a high-strength reforming catalyst and ensures that tar contained in or associated with a crude gas generated at the pyrolysis of a carbonaceous raw material can be converted into light chemical substances in the presence of the catalyst and converted into a fuel constitution containing methane, hydrogen and the like, can be produced. In particular, a reforming catalyst assured of high performance for a tar-containing gas containing high-concentration hydrogen sulfide, such as gasified biomass gas or crude COG, and endowed with high carbon deposition resistance can be produced. Furthermore, according to one embodiment of the present invention, tar can be converted into light chemical substances by using sensible heat of the tar-containing gas.

BRIEF DESCRIPTION OF THE DRAWINGS

Fig. 1 is a view illustrating a portion where a coke oven gas is exhausted from a coke oven.

Fig. 2 is a view for explaining the carbonization process of coal in Examples and the process of reforming a tar-containing gas generated in the carbonization process, by using a catalyst.

Fig. 3 is a wide-angle X-ray diffraction view of the portion corresponding to the Ni(200) peak of the catalyst after reaction in Example 2.

Fig. 4 is a wide-angle X-ray diffraction view of the portion corresponding to the Ni(200) peak of the catalyst after reaction in Comparative Example 5.

BEST MODE FOR CARRYING OUT THE INVENTION

The present invention is described in detail below by referring to specific embodiments.

In the tar-containing gas reforming catalyst produced by the production method of the present invention, nickel (Ni) functions as a main catalytic active component that allows the progress of a reaction of reforming a heavy hydrocarbon with water vapor, hydrogen and carbon dioxide which are present in the gas or externally introduced. Even when high-concentration hydrogen sulfide is present together in the tar-containing gas, the catalyst is considered to be insusceptible to reduction of activity due to sulfur poisoning, because the nickel metal is finely dispersed like a cluster on the catalyst surface and has a large surface area and even when the active metal particle is poisoned during reaction, a new active metal particle is finely dispersed from the matrix in a reducing atmosphere. From the matrix compound, an active metal particle can be deposited like a microcluster in a reducing atmosphere. Tar mainly based on a condensed polycyclic aromatic is considered to be efficiently converted and cracked into light hydrocarbons, because the tar is in a high-temperature state immediately after dry distillation and higher reactivity and at the same time, comes into contact with a highly active nickel metal that is finely dispersed and has a high specific surface area. Out of the components formed into a compound with the nickel element, magnesia is a basic oxide and by virtue of its function of adsorbing carbon dioxide, is considered to react with carbon deposited on the main active component element and exert a role of oxidizing and removing the carbon in the form of carbon monoxide, thereby enabling keeping clean the catalyst surface and stably holding the catalytic performance for a long time. Alumina is considered to fulfil a binder function of stably keeping the compound matrix and at the same time, a function of, for example, finely dividing the crystal phase containing nickel and magnesium and highly dispersing crystal phase fractions in an oxide solid phase to create a state where active species nickel particles deposited on the surface from respective crystal phases are small and highly dispersed.

When the Ni particle size was determined from the Ni(200) peak in the wide-angle X-ray diffraction of the catalyst after reaction and evaluated, it was found that Ni particles were deposited in a state of the average particle diameter being very small.

The carbonaceous raw material as used herein indicates a carbon-containing raw material of producing tar by undergoing pyrolysis and includes materials over a wide range, each containing carbon in the constituent element, such as coal, biomass and plastic containers or packaging materials. Above all, the biomass indicates wood-based biomass such as forest remaining wood, thinned wood, unused wood, timber offcut, construction debris or secondary product (e.g., wood chip, pellet) starting from such a wood material; paper-based biomass such as waste paper that cannot be reused as recycle paper any more; grass plant-based biomass such as weeds that are mowed off in parks, rivers or roads, including bamboo grass and Japanese silver grass; food waste-based biomass such as kitchen wastes; agricultural residues such as rice straw, wheat straw and rice husk; sugar resources such as sugarcane; starch resources such as corn; crop resources such as fat and oil (e.g., rapeseed); sludge; and livestock excretions.

The tar generated at the pyrolysis of a carbonaceous raw material indicates an organic compound containing 5 or more carbons and being liquid at ordinary temperature, which is a mixture composed of a chain hydrocarbon, a cyclic hydrocarbon and the like, though the profile or amount greatly differs depending on the kind of raw material pyrolyzed, the composition of raw material, the temperature history of pyrolysis, and the like. Examples of the main component of tar include, in the case of pyrolysis of coal, a condensed polycyclic aromatic such as naphthalene, phenanthrene, pyrene and anthracene; in the case of pyrolysis of wood-based biomass; benzene, toluene, styrene, naphthalene, anthracene, methyl naphthalene and phenol; and in the case of pyrolysis of food waste-based biomass, toluene, styrene, cresol, phenol and a hetero compound containing a heteroelement such as nitrogen element in a 6-membered or 5-membered ring such as indole, pyrrole, but the present invention is not limited thereto. The pyrolysis tar is present as a gas in the high-temperature state immediately after pyrolysis.

The tar reforming reaction of catalytically cracking and gasifying tar is a reaction of converting tar based mainly on a heavy hydrocarbon into light chemical substances such as methane, carbon monoxide and hydrogen. The reaction route is complicated and not necessarily elucidated, but for example, a hydrogenation reaction that possibly occurs with hydrogen, water vapor, carbon dioxide and the like present in the tar-containing gas or externally introduced, a steam reforming reaction and a dry reforming reaction may be considered. These reactions is an endothermic reaction, and therefore in an actual equipment, a gas with high-temperature sensible heat enters the reaction vessel and is reformed in the catalyst layer and the temperature lowers at the outlet, but in the case of more efficiently reforming heavy hydrocarbon components such as tar, air or oxygen may be introduced, if desired, into the catalyst layer, so that the reforming reaction can be further allowed to proceed while keeping the catalyst layer temperature to a certain extent by the combustion heat evolved when the hydrocarbon components are partially burned.

As for the production method of the reforming catalyst of the present invention, nickel and magnesium are co-precipitated by using a precipitant in a solution containing a nickel compound and a magnesium compound to produce a precipitate, the precipitate is once dried and fired to produce an oxide of nickel and magnesium, (a) an alumina powder and water or (b) an alumina sol is added to the oxide, these are mixed while evaporating the water content to produce a mixture, and the mixture is at least dried and fired, whereby the catalyst is produced.

Examples of the method for at least drying and firing the mixture include a method of drying and firing the mixture, a method of drying, grinding and firing the mixture, a method of drying, grinding, shaping and firing the mixture, a method of drying, calcining, grinding, shaping and firing the mixture, and a method of drying, grinding, calcining, pulverizing, shaping and firing the mixture.

The drying of the precipitate is not particularly limited in the temperature or drying method and may be a general drying method. The co-precipitate after drying may be coarsely ground, if desired, and then fired (in the case where the precipitate after drying is kept in a powder state due to drying of the fluid layer or the like, coarse grinding is unnecessary).

The precipitate before drying is preferably filtered, because the drying time and energy necessary for drying can be reduced. When the precipitate after filtration is washed with pure water or the like, the amount of impurities can be reduced and this is more preferred.

Similarly to drying of the precipitate, the drying of the mixture is also not particularly limited in the temperature or drying method and may be a general drying method.

By taking into consideration the following temperature rise pattern at the firing, the drying above may be performed in one step in the same process with the firing.

Firing of the mixture may be performed in air and the temperature may be from 700 to 1,300°C, preferably from 900 to 1,150°C. If the firing temperature is high, sintering of the mixture proceeds and the strength increases but the specific surface area becomes small and therefore, the catalytic activity decreases. It is preferred to determine the firing temperature by taking into consideration the balance therebetween. After firing, the catalyst may be used as it is, but according to the use form thereafter, the catalyst may be ground and used in a powder particle form or may be shaped by press molding or the like and used as a shaped product. Calcination and shaping steps may be added between drying and firing, and in the case where the catalyst between the calcination step and the shaping step needs to be formed into a powder particle state before shaping, the catalyst may be pulverized and then shaped. In this case, the calcination may be performed in air at approximately from 400 to 800°C, and the shaping may be performed by press molding or the like.

By virtue of using the reforming catalyst produced by such a production method, even in the case of a tar-containing gas containing a large amount of hydrogen sulfide generated at the pyrolysis of a carbonaceous raw material and being mainly based on a condensed polycyclic aromatic that is liable to cause carbon deposition, the associated heavy hydrocarbon such as tar can be reformed with high efficiency and converted into light chemical substances mainly including hydrogen, carbon monoxide and methane. In the case of using this reforming catalyst, when the catalytic performance is deteriorated, at least either one of water vapor or air is put into contact with the catalyst at a high temperature, whereby the deposited carbon or adsorbed sulfur on the catalyst can be removed and the catalytic performance can be recovered to enable stable operation for a long period of time.

In the tar-containing gas reforming catalyst produced by the production method of the present invention, unlike the catalyst obtained by merely forming and firing precipitates of nickel and magnesium and after physically mixing an alumina powder thereto, subjecting the fired powder to shaping and firing, a state of alumina component-containing water being in sufficient contact with the fired precipitate of nickel and magnesium to fill the gap between the fired powder particles can be created by wet-mixing (a) an alumina powder and water or (b) an alumina sol with the fired precipitate of the nickel and magnesium, and it is considered that when the mixture is (i) dried and fired or (ii) dried, calcined, shaped and fired, a sintered body having homogeneously distributed therein the compound of nickel and magnesium and the alumina can be formed, the nickel-magnesium phase can be more finely divided, and the Ni particle deposited therefrom can be in turn highly dispersed, as a result, a highly active shaped product reduced in the amount of carbon deposit can be obtained. Furthermore, since a sintered body having homogeneously distributed therein the compound of nickel and magnesium and the alumina is formed, a shaped product with very high strength is considered to be obtainable from the thus-prepared sintered body.

More specifically, when forming a solution containing a nickel compound and a magnesium compound, each metal compound preferably has high solubility in water, and for example, not only an inorganic salt such as nitrate, carbonate, sulfate and chloride but also an organic salt such as acetate may be suitably used. Above all, a nitrate, a carbonate and an acetate are considered to hardly leave impurities having a possibility of becoming a catalyst poisoning after firing and are preferred. As for the precipitant used in forming a precipitate from the solution, any precipitant may be used as long as the pH of the solution can be changed into a neutral-to-basic pH at which nickel and magnesium each precipitates as a hydroxide, but examples of the precipitant which can be suitably used include an aqueous potassium carbonate solution, an aqueous sodium carbonate solution, an aqueous ammonia solution and a urea solution.

In the reforming catalyst of the present invention, the content of the nickel as a main active component is preferably from 1 to 50 mass%. If the content is less than 1 mass%, the reforming performance of the nickel may not be sufficiently exerted and this is not preferred, whereas if the nickel content exceeds 50 mass%, since the contents of magnesium and aluminum forming the matrix are small, the nickel metal may deposit on the catalyst in a high concentration and is liable to be coarsened and under such reaction conditions, the performance may deteriorate with aging. The magnesium content is preferably from 5 to 45 mass%. If the magnesium content is less than 5 mass%, it tends to become difficult to suppress carbon deposition of hydrocarbon by making use of the basic oxide property of magnesia and stably maintain the catalytic performance for a long period of time. For this reason, the magnesium content is preferably 5 mass% or more. If it exceeds 45 mass%, the contents of other metal elements, that is, nickel and aluminum, may become small and therefore, the reforming activity of the catalyst may not be sufficiently exerted. Furthermore, the alumina content is preferably from 20 to 80 mass%. If the alumina content is less than 20 mass%, a ceramic mainly based on nickel and magnesia may be formed and disadvantageously, the strength when shaping it may become extremely low, whereas if it exceeds 80 mass%, the proportion of nickel as a main active component or magnesia that prevents carbon deposition may become low and the reforming activity of the catalyst may not be sufficiently exerted. The reforming catalyst of the present invention is more preferably produced to have a nickel content of 1 to 35 mass%, a magnesium content of 10 to 25 mass% and an alumina content of 20 to 80 mass%. Alumina as used herein is added in the form of an alumina powder or an alumina sol to the oxide of nickel and magnesium and in the case of adding alumina in the powder form, the particle diameter is preferably as small as possible. For example, the average particle diameter is suitably 100 micrometers or less, and when mixing, the powder is used in a slurry state by adding water or the like. In the case of adding alumina as an alumina sol, an alumina sol with the alumina particle being of 100 nanometer or less on average is suitably used. In order to adjust the content of each metal species to the range above, respective starting materials are preferably prepared by previously calculating the composition. Once the catalyst is produced with a target composition of components, the content of each meal species may be thereafter adjusted based on the formulation at the time.

In addition to the elements above, unavoidable impurities immixed in the catalyst production process or the like or other components causing no change in the catalyst performance may be contained, but immixing of impurities is preferably prevented as much as possible.

As for the method of measuring the contents of respective metal species constituting the reforming catalyst, a method called a scanning high-frequency inductively coupled plasma method (ICP) is used. Specifically, a sample is ground and after adding an alkali flux (e.g., sodium carbonate, sodium borate), heat-melted in a platinum crucible, and the melt is cooled and then entirely dissolved in a hydrochloric acid solution under heating. When this solution is injected in an ICP analyzer, the sample solution undergoes atomization and thermal excitation in a high-plasma state in the analyzer and in the process of returning to the ground state, a light emission spectrum at wavelengths intrinsic to elements is produced. From the light emission wavelength and intensity obtained, the elements contained can be qualitatively and quantitatively determined for the kind and amount.

The reforming catalyst produced in the present invention may have either form of powder or shaped body, and in the case of a shaped body, the reforming catalyst may be spherical, cylindrical, ring-shaped, wheel-shaped or particle-shaped or may have a shape of the catalyst components being coated on a metal- or ceramic-made honeycomb substrate. In use on a fluidized bed, for example, a reforming catalyst compacted by spray-drying or the like is preferably used. In using a fixed bed or a moving bed, suitable examples of the catalyst shaping method include granulation, extrusion molding, press molding and tablet molding, but the shaping method is not particularly limited thereto.

The strength of the shaped catalyst is measured using a Kiya-type harness meter. More specifically, the shaped body is placed on the board of the hardness meter and pressed from above, and the strength when the shaped body is crushed is measured in the N (Newton) unit, whereby the strength can be evaluated.

According to the tar-containing gas reforming method using a reforming catalyst obtained by the production method of the present invention, the operational effects described above are obtained. In this tar-containing gas reforming method, in the presence of the above-described catalyst or after reducing the catalyst, a tar-containing gas generated at the pyrolysis of a carbonaceous raw material is put into contact with hydrogen, carbon dioxide or water vapor present in the gas or introduced from the outside to thereby reform and gasify the tar in the tar-containing gas. The reforming catalyst is preferably reduced, but since reduction proceeds during the reaction, the catalyst may not be reduced. Accordingly, in the presence of the above-described catalyst or after reducing the catalyst, a tar-containing gas generated at the pyrolysis of a carbonaceous raw material is put into contact with an externally introduced mixed gas containing water vapor and air or further containing oxygen, whereby the tar in the tar-containing gas is reformed and gasified. The conditions in reducing the catalyst are not particularly limited as long as a reducing atmosphere at a relatively high temperature is formed for allowing nickel particles as an active metal to deposit like a micro-cluster from the catalyst of the present invention, but the atmosphere may be, for example, a gas atmosphere containing at least one of hydrogen, carbon monoxide and methane, a gas atmosphere after mixing water vapor to such a reducing gas, or an atmosphere after mixing an inert gas such as nitrogen to the gas. The reduction temperature is suitably, for example, from 600 to 1,000°C, and the reduction time that depends on the amount of the catalyst filled is suitably, for example, from 30 minutes to 4 hours but is not particularly limited to the conditions above and may be sufficient if it is a time long enough to entirely reduce the filled catalyst.

Suitable examples of the catalytic reactor include a fixed bed system, a fluidized bed system and a moving bed system, and the inlet temperature of the catalyst layer is preferably from 600 to 1,000°C. If the inlet temperature of the catalyst layer is less than 600°C, catalytic activity when reforming tar into light hydrocarbons mainly including hydrogen, carbon monoxide arid methane is scarcely brought out and this is not preferred. On the other hand, if the inlet temperature of the catalyst layer exceeds 1,000°C, the reforming apparatus becomes expensive, for example, requires construction as a heat-resistant structure, which is profitably disadvantageous. The inlet temperature of the catalyst layer is more preferably from 650 to 1,000°C. Incidentally, in the case where the carbonaceous raw material is coal, the reaction may be allowed to proceed at a relative high temperature, and in the case of wood-based biomass, paper-based biomass or food waste-based biomass, the reaction may be allowed to proceed at a relatively low temperature.

As for the method of generating a tar-containing gas, in the case of a coal raw material, a coke oven is generally used, and in the case of a biomass raw material, for example, an external heating-type rotary kiln, a moving bed furnace or a fluidized bed furnace may be used, but the method is not particularly limited thereto.

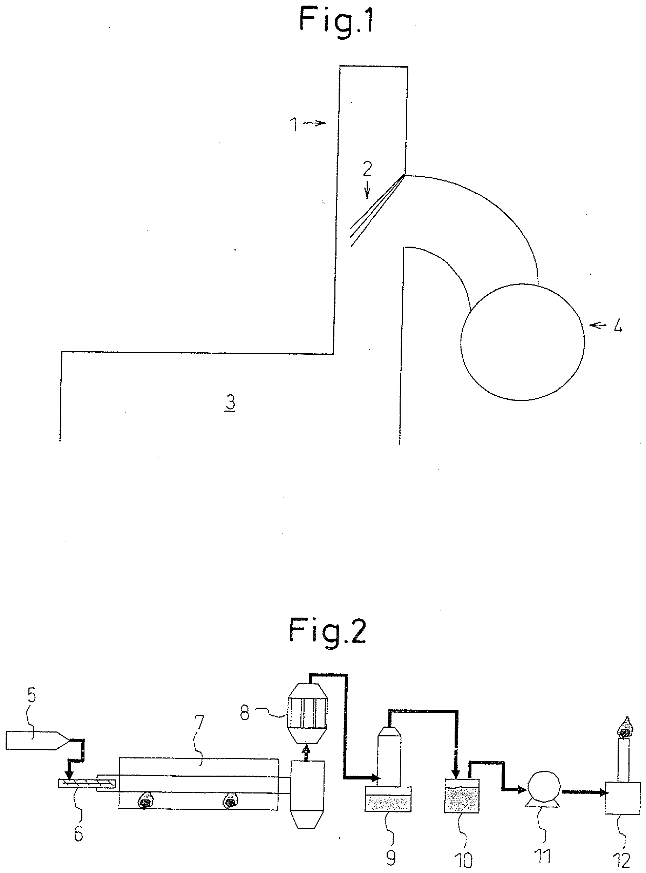

Even in the case where the tar-containing gas produced by pyrolysis or partial oxidation of a carbonaceous raw material is a tar-containing gas having a very high hydrogen sulfide concentration, such as high-temperature coke oven gas exhausted from a coke oven, the tar in the gas can be reformed and gasified by the present invention. The pyrolysis or partial oxidation as used herein specifically means to produce a tar-containing gas by carbonization or by only partially oxidizing and thereby gasifying a carbonaceous raw material. In the current coke oven, the raw material coal is filled into the oven and then subjected to heating and dry distillation to produce coke, and as shown in Fig. 1, the coke oven gas generated in association therewith is cooled by spraying ammoniacal liquor 2 (aqueous ammonia) from a portion called ascending pipe 1 in the top part and collected in a dry main 4 that is a collecting main. The gas component carries sensible heat of about 800°C in the ascending pipe 1 of the coke oven 3, nevertheless, is rapidly cooled to 100°C or less after spraying ammoniacal liquor 2 and the sensible heat cannot be effectively utilized. Accordingly, if the gas sensible heat can be effectively utilized and at the same time, the heavy hydrocarbon components such as tar can be converted into fuel components such as light hydrocarbon (e.g., hydrogen, carbon monoxide, methane), not only the energy is amplified but also the volume of the reducing gas produced there is greatly amplified. In turn, when a process of producing reduced iron by contacting the gas with iron ore becomes possible, there is a possibility that the carbon dioxide emissions involved at present in a blast-furnace process of reducing iron ore with coke can be greatly reduced. According to the present invention, a sensible heat-carrying coke oven gas generated in the coke oven is put into contact with a reforming catalyst produced by the production method of the present invention, so that the coke oven gas can be reformed by effectively utilizing the gas sensible heat and converted into a fuel component such as light hydrocarbon (e.g., hydrogen, carbon monoxide, methane).

The reforming catalyst of the present invention is effective also for a gas not containing hydrogen sulfide but characteristically allows a reforming reaction to stably proceed even in a hydrogen sulfide atmosphere and is more effective when the hydrogen sulfide concentration in the gas is, for example, 20 ppm or more, further 80 ppm or more, particularly 500 ppm or more. The reforming catalyst of the present invention allows a reforming reaction to stably proceed even in a hydrogen sulfide atmosphere, but the hydrogen sulfide concentration in the gas is preferably as low as possible because the catalyst is not poisoned, and the concentration is preferably 4,000 ppm or less, more preferably 3,000 ppm or less.

On the other hand, the tar reforming catalyst contained in the catalytic reactor deteriorates in its catalytic performance resulting from carbon deposition on the catalyst surface in the conversion process of tar into light chemical substances mainly including hydrogen, carbon monoxide and methane or resulting from the catalyst being adsorbed by a sulfur component contained in a pyrolysis gas obtained in the pyrolysis step above. As for the method of regenerating the deteriorated catalyst, water vapor is introduced into the catalytic reactor and the carbon on the catalyst surface is removed through a reaction of water vapor with carbon or the sulfur adsorbed to the catalyst is removed through a reaction of water vapor with sulfur, whereby the catalyst can be regenerated. Also, water vapor introduced is partially or entirely replaced by air and the carbon on the catalyst surface is removed through a combustion reaction of oxygen in air with carbon or the sulfur adsorbed to the catalyst is removed through a reaction of oxygen with sulfur, whereby the catalyst can be regenerated.

EXAMPLES

The present invention is described in greater detail below by referring to Examples, but the present invention is not limited to the Examples.

(Example 1)

To a mixed aqueous solution prepared by precisely weighing nickel nitrate and magnesium nitrate to give a molar ratio of 1:9 between respective metal elements and heating these at 60°C, an aqueous potassium carbonate solution heated at 60°C was added to co-precipitate nickel and magnesium as a hydroxide. Subsequently, the precipitate was thoroughly stirred with a stirrer, further ripened by continuously stirring it for a fixed time while keeping the temperature at 60°C, subjected to suction filtration and thoroughly washed with pure water at 80°C. The precipitate obtained after washing was dried at 120°C, coarsely ground, fired (calcined) at 600°C in air and charged into a beaker, and an alumina sol was added thereto. After thoroughly mixing these in a mixing vessel with a stirring blade, the mixture was transferred to a flask, the flask was fixed to a rotary evaporator, and the water content was evaporated by suction with stirring. A mixture of nickel, magnesium and alumina, attached to the wall surface of the Kjeldahl flask, was transferred to an evaporating dish, dried at 120°C and then calcined at 600°C, and the obtained powder was press-molded into a tablet shape of 3 mm in diameter by using a compression molding device, whereby a tablet-shaped body was obtained. The shaped body obtained was fired at 1,100°C in air to prepare a shaped catalyst where 50 mass% of alumina was mixed in $Ni_{0.1}Mg_{0.9}O$. This shaped body was measured by a Kiya-type hardness meter and found to have a high strength of 180N.

Using 60 ml of the catalyst prepared above, the catalyst was fixed with quartz wool to locate in the center of an SUS-made reaction tube and after inserting a thermocouple into the center position of the catalyst layer, the resulting fixed bed reaction tube was set to a predetermined position.

Before starting the reforming reaction, the reactor was heated to 800°C in a nitrogen atmosphere and then subjected to a reduction treatment for 30 minutes while flowing a hydrogen gas at 100 ml/min. Thereafter, hydrogen : nitrogen = 1:1 (by mol) and $H_2S$ were introduced as a simulated gas of the coke oven gas by preparing each gas to have a concentration shown in Table 1 and flow at 125 ml/min in total, and reaction and evaluation were performed at each temperature shown in Table 1 under ordinary pressure. As for a simulated substance of the tar generated at carbonization of coal, 1-methylnaphthalene that is actually contained in tar and is a liquid substance with low viscosity at ordinary temperature was used as a representative substance and introduced into the reaction tube by a precision pump at a flow rate of 0.025 g/min. Furthermore, pure water was introduced into the reaction tube by a precision pump at a flow rate of 0.1 g/min to give a ratio (molar number of $H_2O$)/(molar number of carbon in 1-methylnaphthalene) = 3. The product gas discharged from the outlet was passed through a room-temperature trap and an ice-temperature trap to remove naphthalene and water, respectively, then injected into a gas chromatograph (HP6890, manufactured by Hewlett-Packard) and subjected to TCD and FID analyses. The reaction ratio of reforming reaction (conversion ratio of methylnaphthalene) was judged by the methane selectivity, CO selectivity, $CO_2$ selectivity and carbon deposition accumulated on the catalyst. These were calculated from the concentration of each component in the outlet gas according to the following formulae.

```
Methane selectivity (%) = (volumetric amount of
CH4)/(amount of C supplied from feed
methylnaphthalene)×100
```

```
CO Selectivity (%) = (volumetric amount of
CO)/(amount of C supplied from feed
methylnaphthalene)×100
```

```
CO2 Selectivity (%) = (volumetric amount of
CO2)/(amount of C supplied from feed
methylnaphthalene)×100
```

```
Carbon deposition (%) = (weight of carbon
deposited)/(amount of C supplied from feed
methylnaphthalene)×100
```

The ratio (hydrogen amplification factor) of the volume of outlet hydrogen gas to the volume of inlet hydrogen gas is shown together.

Table 1

| No. | 1 | 2 | 3 | 4 | 5 |
|---|---|---|---|---|---|
| Reaction temperature (°C) | 600 | 700 | 800 | 900 | 1000 |
| $H_2S$ Concentration (ppm) | 2000 | 2000 | 2000 | 2000 | 2000 |
| Methane selectivity (%) | 3.9 | 3.0 | 2.3 | 0.4 | 0.2 |
| CO Selectivity (%) | 2.3 | 14.0 | 54.6 | 62.7 | 66.4 |
| $CO_2$ Selectivity (%) | 6.6 | 11.7 | 20.4 | 28.3 | 27.0 |
| Carbon deposition (%) | 12.6 | 13.3 | 10.4 | 1.5 | 0.2 |
| Hydrogen amplification factor (-) | 1.3 | 1.4 | 2.0 | 2.2 | 2.3 |
| Conversion ratio (%) | 25.4 | 42.0 | 87.7 | 92.9 | 93.8 |

As understood from the results of Nos. 1 to 5 in Table 1, the cracking reaction of methylnaphthalene as a simulated gas proceeds even in an atmosphere containing $H_2S$ in a high concentration of 2,000 ppm, and this suggests that the catalyst produced by the production method of the present invention is strong in terms of sulfur poisoning resistance. The conversion ratio (methane selectivity + CO selectivity + $CO_2$ selectivity + carbon deposition) becomes high along with rise of the reaction temperature, and it is seen that the cracking reaction of methylnaphthalene proceeds even under severe conditions highly susceptible to sulfur poisoning and carbon deposition. Furthermore, since the hydrogen amplification factor is raised along with rise of the cracking severity of simulated tar, the hydrogen bonded to carbon constituting methylnaphthalene is considered to be converted into a hydrogen molecule with the progress of cracking by the catalyst. The carbon deposition is a relatively low numerical value and decreases as the temperature rises. In addition, it is revealed that the reforming reaction as a whole efficiently proceeds in a high-temperature region of 800°C or more and the conversion ratio increases as the temperature rises.

(Example 2)

The same catalysts as in Example 1 were prepared by the same method as in Example 1 except for firing the catalyst at 950°C and using 30 ml of the catalyst and evaluated for the catalytic activity under the conditions shown in Table 2. The results are shown in Table 2.

Table 2

| No. | 6 | 7 | 8 | 9 | 10 | 11 |
|---|---|---|---|---|---|---|
| Reaction temperature (°C) | 600 | 700 | 800 | 900 | 800 | 800 |
| $H_2S$ Concentration (ppm) | 2000 | 2000 | 2000 | 2000 | 20 | 200 |
| Methane selectivity (%) | 2.7 | 2.2 | 2.4 | 0.1 | 1.2 | 1.5 |
| CO Selectivity (%) | 2.5 | 7.2 | 31.2 | 60.7 | 55.4 | 48.4 |
| $CO_2$ Selectivity (%) | 9.1 | 10.8 | 27.9 | 26.8 | 31.9 | 28.7 |
| Carbon deposition (%) | 3.7 | 6.7 | 11.5 | 3.5 | 2.0 | 7.4 |
| Hydrogen amplification factor (-) | 1.1 | 1.2 | 1.7 | 1.9 | 2.3 | 2.2 |
| Conversion ratio (%) | 18.0 | 26.9 | 73.0 | 91.1 | 90.5 | 86.0 |

As understood from the results of Nos. 6 to 9 in Table 2, in an atmosphere having a high $H_2S$ concentration of 2,000 ppm, the reforming activity on the simulated tar is raised as the temperature rises to 900°C and the cracking severity is enhanced. From comparison among the results of Nos. 8 , 10 and 11 where the reaction temperature is the same and the $H_2S$ concentration differs, it is seen that the conversion ratio of the simulated tar tends to decrease as the concentration becomes high but even when the $H_2S$ concentration is 2,000 ppm, the catalyst exhibits high activity with a conversion ratio of 71% at 800°C.

The size of Ni particle was evaluated as follows from the Ni(200) peak in the wide-angle X-ray diffraction of the catalyst after the reaction. First, the material was set in a powder sample holder, a CuKα line was generated at an output of 40 kV and 150 mA by using RINT 1500 manufactured by Rigaku, and the measurement was performed under the conditions of monochrometer: graphite, divergence slit and scattering slit: 1°, light-receiving slit: 0.15 mm, monochromatic receiving slit: 0.8 mm, sampling width: 0.01 deg, and scanning speed: 2 deg/min. In the measured profile, particularly with respect to the Ni(200) peak with 2θ appearing in the vicinity of about 52 deg, the peak width in a position at half the height of the peak top (half-width value) was measured and based on the value obtained, the size was calculated according to the following Scherrer equation:

$$D_{hkl} = K\lambda/\beta\cos\theta$$

$D_{hkl}$ is the size of the crystal grain and when evaluated by the Ni(200) diffraction line, the size indicates the size of the Ni crystal grain. K is a constant but is set to 0.9 because the half value width is used for β as described below. λ is the wavelength of measurement X-ray and was 1.54056 Å in this measurement. Also, β is the width of diffraction line by the size of the crystal grain and the half value width above was used. θ is the Bragg angle of the Ni(200) diffraction line.

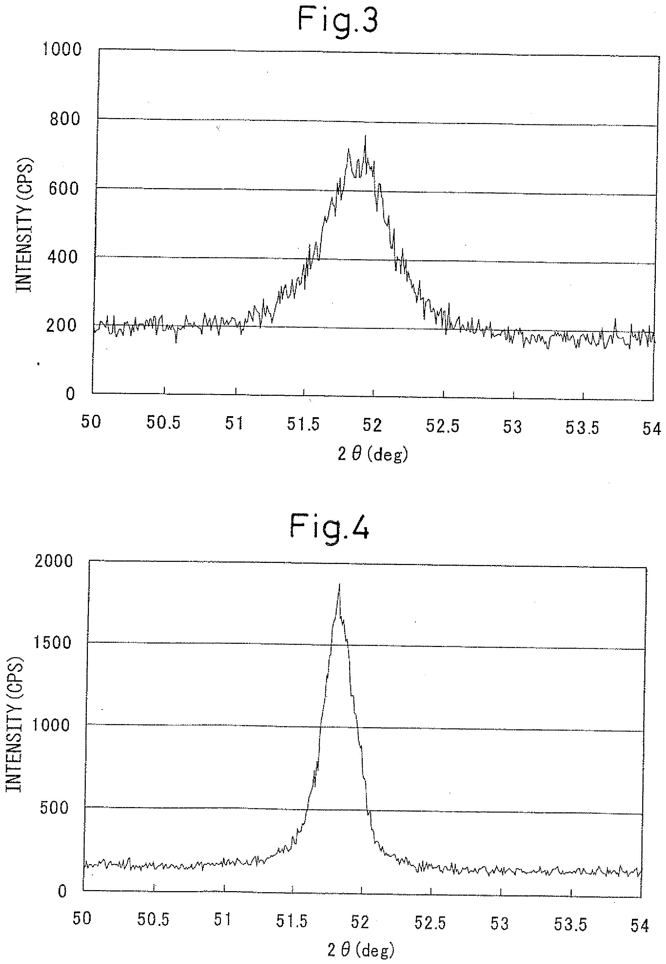

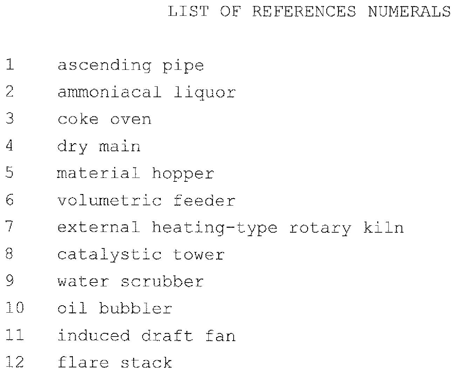

According to the method above, when the catalyst used in this test was ground and the Ni particle size was determined from the Ni(200) peak in the wide-angle X-ray diffraction illustrated in Fig. 3, the particle diameter was calculated as 17 nm and it is estimated that very fine Ni particles were deposited. This is considered to be a cause bringing out high reforming activity and high carbon deposition resistance.

(Example 3)

Catalysts were prepared in the same manner as in Example 1 except that in the oxide of nickel and magnesium, mass% of each of nickel and magnesium was changed as shown in Table 3. The strength was from 100 to 120N when alumina was 20 mass%, but the strength was increased with increase in the amount of alumina added, that is, the strength was from 160 to 200 N when alumina was 50 mass%, and from 180 to 240 N when alumina was 80 mass%. In all cases, the catalyst was rated as having relatively high strength. As for the experimental conditions, the evaluation was performed under the conditions of No. 3 in Example 1, that is, reaction temperature of 800°C, $H_2S$ concentration of 2,000 ppm and atmospheric pressure. The results are shown in Tables 3 and 4.

Table 3

| No. | 12 | 13 | 14 | 15 | 16 | 17 | 18 | 19 |
|---|---|---|---|---|---|---|---|---|
| Ni (mass%) | 0.5 | 1 | 5 | 10 | 12 | 15 | 17 | 25 |
| Mg (mass%) | 12 | 11 | 10 | 5 | 3 | 25 | 17 | 11 |
| Alumina (mass%) | 80 | 80 | 80 | 80 | 80 | 50 | 50 | 50 |
| Methane selectivity (%) | 1.1 | 1.6 | 2.5 | 2.3 | 2.3 | 2.4 | 2.7 | 3.4 |
| CO Selectivity (%) | 6.5 | 18.4 | 32.2 | 42.5 | 43.1 | 50.1 | 49.6 | 48.5 |
| $CO_2$ Selectivity (%) | 11.3 | 17.7 | 31.7 | 24.3 | 25.8 | 21.3 | 21.6 | 21.8 |
| Carbon deposition (%) | 10.5 | 11.8 | 12.3 | 13.1 | 13.8 | 15.7 | 16.2 | 17.5 |
| Hydrogen amplification factor (-) | 1.2 | 1.4 | 1.7 | 1.8 | 1.9 | 2.1 | 2.1 | 2.2 |
| Conversion ratio (%) | 29.4 | 49.5 | 78.7 | 82.2 | 85.0 | 89.5 | 90.1 | 91.2 |

Table 4

| No. | 20 | 21 | 22 | 23 | 24 |
|---|---|---|---|---|---|
| Ni (mass%) | 1 | 5 | 35 | 50 | 55 |
| Mg (mass%) | 47 | 45 | 22 | 15 | 6 |
| Alumina (mass%) | 20 | 20 | 20 | 20 | 20 |

(continued)

| No. | 20 | 21 | 22 | 23 | 24 |
|---|---|---|---|---|---|
| Methane selectivity (%) | 1.5 | 2.4 | 4.2 | 5.1 | 5.2 |
| CO Selectivity (%) | 17.8 | 32.7 | 47.4 | 46.2 | 47.2 |
| $CO_2$ Selectivity (%) | 17.6 | 30.2 | 22.8 | 24.3 | 20.0 |
| Carbon deposition (%) | 10.2 | 10.8 | 17.6 | 18.3 | 22.1 |
| Hydrogen amplification factor (-) | 1.4 | 1.6 | 2.2 | 2.3 | 2.4 |
| Conversion ratio (%) | 47.1 | 76.1 | 92.0 | 93.9 | 94.5 |

As understood from the results in Tables 3 and 4, as the mass of Ni which is the main active component is smaller, the conversion ratio is lower and the hydrogen amplification factor is also decreased. In the case of No. 12 where the mass of Ni is less than 1 mass%, both the cracking severity and the hydrogen amplification factor are low. On the other hand, as the mass of Ni is larger, the cracking severity and the hydrogen amplification factor become higher. However, in the case of No. 24 where the mass of Ni exceeds 50 mass%, the amount of carbon deposited is large. As seen from comparison between No. 13 and No. 20 or between No. 14 and No. 21, even when the mass of Ni is almost equal, a difference is produced depending on the mass of alumina and as the amount of alumina component is larger, the catalytic activity is higher. This seems to result because the alumina component finely divided the nickel-magnesia compound phase to make small the size of the Ni metal particle deposited at the reduction and in turn make large the reaction surface area. The carbon deposition is lower as the mass of Mg is larger and in the case of No. 16 where the mass of Mg is less than 5 mass%, the amount of carbon deposited becomes high. Furthermore, when a compound with the mass of alumina being 10% was prepared, in all compositions, only a low crush strength of 50 to 80N was obtained.

(Example 4)

Catalysts were prepared and evaluated in the same manner as in Example 1 except that the reaction temperature was 800°C, the $H_2S$ concentration was 2,000 ppm, and $H_2O$, $CO_2$ and $O_2$ were introduced at the reaction to satisfy the conditions shown in Table 5. The results are shown in Table 5. Here, C in $H_2O$/C, $CO_2$/C and $O_2$/C indicates the amount of C supplied (molar ratio) from the feed methylnaphthalene.

Table 5

| No. | 25 | 26 | 27 | 28 |
|---|---|---|---|---|
| $H_2O$/C (-) | 3 | 3 | 3 | 3 |
| $CO_2$/C (-) | 1 | 2 | 0 | 1 |
| $O_2$/C (-) | 0 | 0 | 0.5 | 0.5 |
| Methane selectivity (%) | 2.1 | 2.0 | 1.9 | 1.7 |
| CO Selectivity (%) | 51.7 | 52.5 | 47.7 | 49.4 |
| $CO_2$ Selectivity (%) | 23.1 | 21.6 | 32.1 | 31.5 |
| Carbon deposition (%) | 13.0 | 14.3 | 10.2 | 10.5 |
| Hydrogen amplification factor (-) | 2.1 | 2.2 | 2.2 | 2.3 |
| Conversion ratio (%) | 89.9 | 90.4 | 91.9 | 93.1 |

It is confirmed from the results in Table 4 that when $H_2O$, $CO_2$ or $O_2$ is introduced from the outside, the reforming reaction proceeds in comparison with the results of No. 3 of Example 1. In the case of introducing $O_2$, absorption of heat in steam reforming with $H_2O$ or dry reforming with $CO_2$ can be thermally compensated for by combustion heat and when envisaging an actual reactor, this is a very effective technique.

(Example 5)

Coal charge (80 kg) used in an actual coke oven was filled in a batch furnace capable of simulating a coke oven and the temperature was raised to 800°C according to an actual coke oven to generate a real coke oven gas and real tar associated therewith. At this time, the amount of tar in the tar-containing gas was about 0.04 g/L. The gas was collected by a suction pump and used for experiments. A reaction tube was disposed inside of an electric furnace heated to give a reaction temperature of 800°C, and an oxide obtained by mixing 50 mass% of alumina in $Ni_{0.1}Mg_{0.9}O$ by the same production method as in Example 1 and shaped into a ring form (strength was about 200N) was placed in the center part of the reaction tube.

After reduction for 2 hours by flowing hydrogen at 10 NL/min, the gas collected from the batch furnace was flowed into the catalyst layer and the catalytic reforming activity on the real coke oven gas and the associated real tar was continuously evaluated for 5 hours. The inlet gas flow rate was about 10 NL/min, and the amount of the catalyst filled was about 1 L. Incidentally, it was confirmed by gas chromatography that the inlet gas composition was almost the same composition as the real coke oven gas. It was confirmed that from 2,400 to 2,500 ppm of hydrogen sulfide was contained in the gas. The tar concentration in the gas was assessed by the following method. That is, a 1 L-volume vacuum collection bottle previously kept in a vacuum state was attached to an on-off cock disposed in each of the inlet and outlet of the catalyst layer and each gas was collected by opening the cock. The inside of the collection bottle was washed with dichloromethane and after completely removing dichloromethane at ordinary temperature, the mass of the liquid component was quantitatively determined. The tar cracking severity was determined from the ratio of the mass of the tar component in the catalyst layer outlet gas to the mass of the tar component in the catalyst layer inlet gas. As a result, the tar conversion ratio was 88% when 2 hours passed after initiating the reaction, and the hydrogen amplification factor reached 2.2 on average in 5 hours.

(Example 6)

After allowing the reaction to continuously proceed for 8 hours under the conditions of No. 3 in Example 1, charging of the raw material was stopped and the catalyst layer temperature was kept at 800°C for 5 hours while flowing $N_2$ at 60 ml/min as a carrier gas and flowing $H_2O$ at 60 ml/min in terms of a gas to remove carbon or sulfur accumulated on the catalyst. Thereafter, charging of the raw material was started under the same conditions as in Example 1, as a result, it was confirmed that the catalyst exhibits 90% or more of the activity before regeneration. Also, the hydrogen concentration in the gas after reforming in this test was high, revealing that the gas was converted into a gas mainly comprising hydrogen, carbon monoxide and methane.

(Example 7)

Similarly to Example 6, after allowing the reaction to continuously proceed for 8 hours under the conditions of No. 3 in Example 1, charging of the raw material was stopped and the catalyst layer temperature was kept at 800°C for 2 hours while flowing $N_2$ at 60 ml/min as a carrier gas and flowing air at 60 ml/min to remove carbon or sulfur accumulated on the catalyst. Thereafter, charging of the raw material was started under the same conditions as in Example 1, as a result, it was confirmed that the catalyst exhibits 90% or more of the activity before regeneration. The hydrogen concentration in the gas after reforming in this test was high, revealing that the gas was converted into a gas mainly comprising hydrogen, carbon monoxide and methane.

(Example 8)

A rotary kiln 7 illustrated in Fig. 2 as a pyrolysis furnace was heated to 800°C, a coal mass was introduced into the rotary kiln 7 at a supply rate of 20 kg/h from a hopper 5 filled with a coal mass (classified into 5 cm or less) by using a volumetric feeder 6 to generate a carbonization gas containing tar, the tar-containing gas (carbonization gas) in a state of the flow rate being adjusted to give a gas flow rate of about 10 $Nm^3$/h by an induced draft fan 11 was introduced into a catalyst tower 8 filled with a ring-shaped catalyst having the same catalyst composition as in Example 1 and having an outer diameter of 15 mm, an inner diameter of 5 mm and a height of 15 mm and kept at about 800°C to come into contact with the catalyst, and the catalytic cracking activity on the tar-containing gas was continuously evaluated for 8 hours. Thereafter, the reformed gas was cooled with water by a scrubber 9, dedusted by an oil bubbler 10 and then combusted/diffused by a flare stack 12. Incidentally, before charging the raw material, a reduction treatment was performed with hydrogen at 5 $Nm^3$/h for 30 minutes. The inlet gas flow rate was about 10 $Nm^3$/h and the amount of the catalyst filled was about 15 L. At this time, the amount of tar in the tar-containing gas was about 60 g/$Nm^3$. It was confirmed by gas chromatography that the inlet gas composition was almost the same composition as the real coke oven gas. Also, in the gas, about 6% of water contained in the raw material coke was vaporized and contained as water vapor. Furthermore, the gas was confirmed to contain from 2,000 to 2,500 ppm of hydrogen sulfide. The tar concentration in the gas was assessed by sucking the gas from the inlet and outlet of the catalyst layer for a fixed time, collecting the tar component in the gas through a 5-stage impinger filled with dichloromethane, and after removing dichloromethane, quantitatively determining the component that is liquid at ordinary temperature. The tar conversion ratio was determined from the ratio of the mass of the tar component in the catalyst layer outlet gas to the mass of the tar component in the catalyst layer inlet gas collected by the method above. As a result, the tar conversion ratio was about 81% when 3 hours passed after initiating the reaction, and the hydrogen amplification factor reached 2.3 on average in 8 hours, verifying that the catalytic dry gasification reaction of the tar-containing gas proceeded on a bench plant scale.

(Example 9)

Using the same equipment as in Example 8, a building waste chip (classified into 5 cm or less) was supplied thereinto at a supply rate of 10 kg/h and dry-distillated in the rotary kiln 7 kept at 800°C to generate a biomass tar-containing gas (dry distillation gas), the tar-containing gas was introduced into the catalyst tower filled with the same shaped catalyst as in Example 8 except for having the same composition as in No. 18 of Example 3 and kept at about 800°C to come into contact with the catalyst, and the catalytic cracking activity on the tar-containing gas was continuously evaluated for 8 hours. Incidentally, before charging the raw material, a reduction treatment was performed with hydrogen at 5 $Nm^3$/h for 30 minutes. The inlet gas flow rate was about 10 $Nm^3$/h and the amount of the catalyst filled was about 15 L. At this time, the amount of tar in the biomass tar-containing gas was about 10 g/$Nm^3$. It was confirmed by gas chromatography that the inlet gas composition was a composition close to that of the coke oven gas and mainly comprising hydrogen, CO, methane and $CO_2$. Also, in the gas, about 16% of water contained in the raw material building waste was vaporized and contained as water vapor. Furthermore, the gas was confirmed to contain about 25 ppm of hydrogen sulfide. The tar conversion ratio was assessed in the same manner as in Example 8 by collecting the tar component in the tar-containing gas from the inlet and outlet of the catalyst layer and quantitatively determining the tar portion. As a result, the tar cracking severity was 94% when 3 hours passed after initiating the reaction, and the hydrogen amplification factor stably persisted at about 6 throughout 8 hours, verifying that the catalytic dry gasification reaction of the biomass tar-containing gas proceeded on a bench plant scale.

(Example 10)

Using the same equipment as in Example 8, a dried mass (classified into 5 cm or less) of food waste collected from supermarket and the like was supplied thereinto at a supply rate of 10 kg/h and dry-distillated in the rotary kiln 7 kept at 800°C to generate a biomass tar-containing gas (dry distillation gas), the tar-containing gas was introduced into the catalyst tower filled with the same shaped catalyst as in Example 8 except for having the same composition as No. 18 of Example 3 and kept at about 800°C to come into contact with the catalyst, and the catalytic cracking activity on the tar-containing gas was continuously evaluated for 8 hours. Incidentally, before charging the raw material, a reduction treatment was performed with hydrogen at 5 $Nm^3$/h for 30 minutes. The inlet gas flow rate was about 10 $Nm^3$/h and the amount of the catalyst filled was about 15 L. At this time, the amount of tar in the biomass tar-containing gas was about 23 g/$Nm^3$. Here, it was confirmed by gas chromatography that the inlet gas composition was a composition close to that of the coke oven gas and mainly comprising hydrogen, CO, methane and $CO_2$. In the gas, about 30% of water contained in the raw material mixture of dried food waste and building waste was vaporized and contained as water vapor. Furthermore, the gas was confirmed to contain about 400 ppm of hydrogen sulfide. The tar cracking severity was assessed in the same manner as in Example 8 by collecting the tar component in the tar-containing gas from the inlet and outlet of the catalyst layer and quantitatively determining the tar portion. As a result, the tar conversion ratio was 88% when 3 hours passed after initiating the reaction, and the hydrogen amplification factor was gradually decreased from the initial stage of reaction due to sulfur poisoning but stably persisted at over about 4 after 4 hours from the initiation of reaction, verifying that the catalytic dry gasification reaction of the biomass tar-containing gas proceeded on a bench plant scale.

(Example 11)

Using the same equipment as in Example 8, a mixture prepared by mixing a dried mass (classified into 5 cm or less) of the same food waste as in Example 10 and a building waste chip (classified into 5 cm or less) at a weight ratio of 1:2 was supplied thereinto at a supply rate of 10 kg/h and dry-distillated in the rotary kiln 7 kept at 800°C to generate a biomass tar-containing gas (dry distillation gas), the tar-containing gas was introduced into the catalyst tower filled with the same shaped catalyst as in Example 8 except for having the same composition as No. 18 of Example 3 and kept at about 800°C to come into contact with the catalyst, and the catalytic cracking activity on the tar-containing gas was continuously evaluated for 8 hours. Incidentally, before charging the raw material, a reduction treatment was performed with hydrogen at 5 $Nm^3$/h for 30 minutes. The inlet gas flow rate was about 10 $Nm^3$/h and the amount of the catalyst filled was about 15 L. At this time, the amount of tar in the biomass tar-containing gas was about 14 g/$Nm^3$. It was confirmed by gas chromatography that the inlet gas composition was a composition close to that of the coke oven gas and mainly comprising hydrogen, CO, methane and $CO_2$. In the gas, about 20% of water contained in the raw material mixture of dried food waste and building waste was vaporized and contained as water vapor. Furthermore, the gas was confirmed to contain about 200 ppm of hydrogen sulfide. The tar conversion ratio was assessed in the same manner as in Example 8 by collecting the tar component in the tar-containing gas from the inlet and outlet of the catalyst layer and quantitatively determining the tar portion. As a result, the tar conversion ratio was 87% when 3 hours passed after initiating the reaction, and the hydrogen amplification factor was gradually decreased from the initial stage of reaction due to sulfur poisoning but stably persisted at about 4.4 after 4 hours from the initiation of reaction, verifying that the catalytic dry gasification reaction of the biomass tar-containing gas proceeded on a bench plant scale.

(Example 12)

After reforming for 8 hours in Example 8, the supply of the raw material coal was stopped, the inside of the system was purged with nitrogen, air was sucked in from the gas take-in port provided near the inlet of the rotary kiln 7 kept at 800°C, and the air heated in the rotary kiln was introduced into the catalyst tower for about 10 hours to oxidize and remove the deposited carbon and adsorbed sulfur accumulated on the catalyst surface after reforming and regenerate the catalyst. Thereafter, the inside of the system was purged with nitrogen to expel the oxygen portion, a reduction treatment was again performed with hydrogen at 5 $Nm^3$/h for 30 minutes, the raw material was then supplied at the same rate to come into contact with the catalyst, and the catalytic cracking activity on the tar-containing gas was continuously evaluated for 8 hours. As a result, the same numerical values as before regeneration were obtained for the tar cracking severity and hydrogen amplification factor after regeneration and it was verified that regeneration of the catalyst by air combustion was sufficiently effected. Also, when the catalytic cracking of the biomass tar-containing gas and the subsequent catalyst generation were repeated 5 times, the same result as before regeneration was stably obtained for the hydrogen amplification factor and it was revealed that operation for a long period can be performed.

(Example 13)

After reforming for 8 hours in Example 9, the supply of the raw material building waste chip was stopped, the inside of the system was purged with nitrogen in the same manner as in Example 12, air was sucked in from the gas take-in port provided near the inlet of the rotary kiln 7 kept at 800°C, and the air heated in the rotary kiln was introduced into the catalyst tower for about 10 hours to oxidize and remove the deposited carbon and adsorbed sulfur accumulated on the catalyst surface after reforming and regenerate the catalyst. Thereafter, the inside of the system was purged with nitrogen to expel the oxygen portion, a reduction treatment was again performed with hydrogen at 5 $Nm^3$/h for 30 minutes, the raw material was then supplied at the same rate as in Example 9 to come into contact with the catalyst, and the catalytic cracking activity on the tar-containing gas was continuously evaluated for 8 hours. As a result, the same numerical values as before regeneration were obtained for the tar conversion ratio and hydrogen amplification factor after regeneration and it was verified that regeneration of the catalyst by air combustion was sufficiently effected also in the case of a building waste chip. Furthermore, when the catalytic cracking of the biomass tar-containing gas and the subsequent catalyst generation were repeated 6 times, the same result as before regeneration was stably obtained for the hydrogen amplification factor and it was revealed that operation for a long period can be performed.

(Example 14)

After reforming for 8 hours in Example 10, the supply of the raw material dried mass of food waste was stopped, the inside of the system was purged with nitrogen in the same manner as in Example 12, air was sucked in from the gas take-in port provided near the inlet of the rotary kiln 7 kept at 800°C, and the air heated in the rotary kiln was introduced into the catalyst tower for about 10 hours to oxidize and remove the deposited carbon and adsorbed sulfur accumulated on the catalyst surface after reforming and regenerate the catalyst. Thereafter, the inside of the system was purged with nitrogen to expel the oxygen portion, a reduction treatment was again performed with hydrogen at 5 $Nm^3$/h for 30 minutes, the raw material was then supplied at the same rate as in Example 10 to come into contact with the catalyst, and the catalytic cracking activity on the tar-containing gas was continuously evaluated for 8 hours. As a result, the same numerical values as before regeneration were obtained for the tar conversion ratio and hydrogen amplification factor after regeneration and it was verified that regeneration of the catalyst by air combustion was sufficiently effected also in the case of a dried mass of food waste. Furthermore, when the catalytic cracking of the tar-containing gas and the subsequent catalyst generation were repeated 5 times, the same result as before regeneration was stably obtained for the hydrogen amplification factor and it was revealed that operation for a long period can be performed.

(Example 15)

After reforming for 8 hours in Example 11, the supply of the raw material mixture.of a dried mass of food waste and a building waste chip was stopped, the inside of the system was purged with nitrogen in the same manner as in Example 12, air was sucked in from the gas take-in port provided near the inlet of the rotary kiln 7 kept at 800°C, and the air heated in the rotary kiln was introduced into the catalyst tower for about 10 hours to oxidize and remove the deposited carbon and adsorbed sulfur accumulated on the catalyst surface after reforming and regenerate the catalyst. Thereafter, the inside of the system was purged with nitrogen to expel the oxygen portion, a reduction treatment was again performed with hydrogen at 5 $Nm^3$/h for 30 minutes, the raw material was then supplied at the same rate as in Example 11 to come into contact with the catalyst, and the catalytic cracking activity on the tar-containing gas was continuously evaluated for 8 hours. As a result, the same numerical values as before regeneration were obtained for the tar conversion ratio and hydrogen amplification factor after regeneration and it was verified that regeneration of the catalyst by air combustion was sufficiently effected also in the case of a mixture of a dried mass of food waste and a building waste chip. Furthermore, when the catalytic cracking of the biomass tar-containing gas and the subsequent catalyst generation were repeated 5 times, the same result as before regeneration was stably obtained for the hydrogen amplification factor and it was revealed that operation for a long period can be performed.

(Comparative Example 1)

A catalytic reforming test with a naphtha primary reforming catalyst produced by Süd-Chemie (SC11NK, a 20 mass% Ni-supported alumina shaped product) (strength is high and 500N), that is one of industrial catalysts, was performed under the conditions of No. 8 of Example 2 by the same experimental method as in Example 1, as a result, methane selectivity was 2.5%, CO selectivity was 4.2%, $CO_2$ selectivity was 5.9%, carbon deposition was 32.8%, conversion ratio was 45.4%, and hydrogen amplification factor was 1.3.

Accordingly, although the industrial catalyst has very high strength, the results are a low conversion rate (12.6%) of methylnaphthalene into a gas component but on the other hand, very high carbon deposition. Due to very high carbon deposition, the catalyst life is highly likely to be short and even if a regeneration treatment is performed after reaction, an oxidation treatment at a high temperature or for a long time needs to be performed, leading to the prediction that due to large combustion heat generated, catalytic active particles cause sintering and performance after regeneration is further decreased.

(Comparative Example 2)

Evaluation was performed using the same test equipment as in Example 4 under the same conditions as in Example 5 by placing the industrial catalyst (SC11NK) used in Comparative Example 1 in the test tube. As a result, the tar conversion ratio was only 22% when 2 hours passed after initiating the reaction, and the hydrogen amplification factor was about 1.5 on average in 5 hours, revealing that the industrial catalyst is low in the tar cracking severity also in the evaluation of cracking of real coke oven gas and real tar.

(Comparative Example 3)

A precipitate of nickel and magnesium was prepared in the same manner as in Example 1, filtered, washed, dried and then fired at 950°C for 20 hours in air to obtain a compound of nickel and magnesia. Thereafter, a silica sol was added to contain $SiO_2$ in a proportion of 50 mass% in the catalyst, whereby a slurry was prepared. The slurry was spray-dried under the conditions of giving an average particle diameter of about 50 $\mu$m, and the powder obtained was fired at 950°C in air. Furthermore, the obtained solid solution oxide was shaped and fired by the same experimental method as in Example 1 and evaluated for the activity under the same conditions as in No. 8 of Example 2. As a result, it was revealed that the conversion ratio of methylnaphthalene was only about 15%, showing very low catalytic activity, the hydrogen amplification factor was 1.0, showing utterly no amplification, the strength was low and the catalytic activity was also low.

(Comparative Example 4)

A precipitate of nickel and magnesium was prepared in the same manner as in Example 1, filtered, washed, dried and then fired at 950°C in air to obtain a compound of nickel and magnesia. Thereafter, an alumina powder was weighed to become 50 wt%, and the compound and powder were physically mixed using a mortar. The mixture was shaped and fired by the same experimental method as in Example 1 and evaluated for the strength and also for the activity under the same conditions as in No. 8 of Example 2. As a result, the catalytic activity exhibited was a moderate catalytic activity such that the conversion ratio of methylnaphthalene was about 66.7% and the hydrogen amplification factor was 1.6, but the strength was only 40N, revealing that the strength is in a level making difficult the practical application.

(Comparative Example 5)

As disclosed, for example, in F. Basile et al., Stud. Surf. Sci. Catal., Vol. 119 (1998) and Kokai No. 50-4001, a catalyst was prepared by the production method of preparing a precipitate from an aqueous solution containing nickel, magnesium and alumina with use of a precipitant and firing the precipitate. That is, nickel nitrate, magnesium nitrate and aluminum nitrate were used to give the same molar ratio of 1:9 as in Example 1 between metal elements of nickel and magnesium, and alumina was precisely weighed by calculating its content to become 50 wt%. An aqueous potassium carbonate heated at 60°C was added to a mixed solution prepared by mixing those in pure water at 60°C and then thoroughly stirred with a stirrer in the same manner as in Example 1. Subsequently, the precipitate was ripened by continuously stirring it for a fixed time while maintaining the temperature at 60°C, subjected to suction filtration, thoroughly washed with pure water at 80°C, transferred to an evaporating dish, dried at 120°C and then ground in a mortar, and the obtained powder was press-molded in the same manner as in Example 1 by using a compression molding device to obtain a tablet-shaped body. The shaped body obtained was fired at 1,100°C in air to prepare a shaped catalyst, and the shaped catalyst was evaluated for activity under the same conditions as in No. 8 of Example 2. As a result, the catalytic activity exhibited was only a moderate catalytic activity such that the conversion ratio of methylnaphthalene was about 62.6% (out of this, the carbon deposition was 19.9%) and the hydrogen amplification factor was 1.6, and it was revealed that the amount of carbon deposited was very large.

When the catalyst after reaction was ground in the same manner as in Example 2 and the Ni particle diameter was determined from the Ni(200) peak according to the wide-angle X-ray diffraction illustrated in Fig. 4, the particle diameter was calculated as 35 nm and it is considered that since Ni cannot be microdeposited from the compound prepared by this method, the results above, that is, a large amount of carbon deposited and a low reforming activity, were brought about.

**Claims**

1. A production method of a tar-containing gas reforming catalyst, comprising:

   adding a precipitant to a solution containing a nickel compound and a magnesium compound to co-precipitate nickel and magnesium and produce a precipitate,
   drying and firing said precipitate to produce oxides of nickel and magnesium,
   adding and mixing (a) an alumina powder and water or (b) an alumina sol to said oxides to produce a mixture, and at least drying and firing said mixture to produce the catalyst.

2. The production method of a tar-containing gas reforming catalyst as claimed in claim 1, wherein the catalyst is produced by subjecting said mixture (i) to drying and firing or (ii) to drying, calcination, grinding, shaping and firing.

3. The production method of a tar-containing gas reforming catalyst as claimed in claim 1 or 2, wherein the catalyst is produced such that the produced tar-containing gas reforming catalyst has a nickel content of 1 to 50 mass%, a magnesium content of 5 to 45 mass% and an alumina content of 20 to 80 mass%.

4. The production method of a tar-containing gas reforming catalyst as claimed in claim 1 or 2, wherein the catalyst is produced such that the produced tar-containing gas reforming catalyst has a nickel content of 1 to 35 mass%, a magnesium content of 10 to 25 mass% and an alumina content of 20 to 80 mass%.

5. A method comprising the steps of:

   producing a tar-containing gas reforming catalyst according to the production method claimed in any one of claims 1 to 4, and
   reforming tar-containing gas using the tar-containing gas reforming catalyst.

6. The method as claimed in claim 5, wherein reforming the tar-containing gas is conducted in the presence of said tar-containing gas reforming catalyst or in the presence of said catalyst after reduction, while hydrogen, carbon dioxide and water vapor in a tar-containing gas generated at a pyrolysis of a carbonaceous raw material are put into contact with the tar in said tar-containing gas, to thereby reform and gasify the tar.

7. The method as claimed in claim 5 or 6, wherein said tar-containing gas generated at the pyrolysis is put into contact with at least one of hydrogen, carbon dioxide and water vapor introduced from the outside to thereby reform and gasify said tar-containing gas.

8. The method as claimed in any one of claims 5 to 7, wherein said tar-containing gas is a tar-containing gas containing 20 ppm or more of hydrogen sulfide.

9. The method as claimed in any one of claims 6 to 8, wherein said at least one of hydrogen, carbon dioxide and water vapor is further added with an oxygen-containing gas and brought into contact with the tar-containing gas.

10. The method as claimed in any one of claims 5 to 9, wherein said tar-containing gas is a dry distillation gas generated when dry-distilling coal.

11. The method as claimed in any one of claims 5 to 9, wherein said tar-containing gas is a coke oven gas discharged from a coke oven.

12. The method as claimed in any one of claims 5 to 9, wherein said tar-containing gas is a dry distillation gas when dry-distilling at least either one of wood-based biomass and food waste-based biomass.

13. The method as claimed in any one of claims 5 to 12, wherein said tar-containing gas is contacted with said tar-containing gas reforming catalyst at 600 to 1,000°C.

14. A regeneration method of a tar-containing gas reforming catalyst, wherein when the method claimed in any one of claims 5 to 13 is practiced and said catalyst undergoes performance degradation by at least either one of carbon deposition and sulfur poisoning, said catalyst is brought into contact with at least either one of water vapor and air to regenerate said catalyst.

**Patentansprüche**

1. Ein Verfahren zur Herstellung eines Katalysators für die Reformierung von teerhaltigem Gas, umfassend:

Zugeben eines Fällungsmittels zu einer Lösung, die eine Nickelverbindung und eine Magnesiumverbindung enthält, um Nickel und Magnesium miteinander auszufällen und ein Präzipitat herzustellen,
Trocknen und Brennen des Präzipitats, um Oxide von Nickel und Magnesium herzustellen,
Zugeben und Mischen (a) eines Aluminiumoxidpulvers und Wassers oder (b) eines Aluminiumoxidsols zu den Oxiden, um ein Gemisch herzustellen, und
mindestens Trocknen und Brennen des Gemischs, um den Katalysator herzustellen.

2. Das Verfahren zur Herstellung eines Katalysators für die Reformierung von teerhaltigem Gas wie in Anspruch 1 beansprucht, wobei der Katalysator hergestellt wird, indem das Gemisch (i) Trocknen und Brennen oder (ii) Trocknen, Kalzinieren, Mahlen, Formen und Brennen unterzogen wird.

3. Das Verfahren zur Herstellung eines Katalysators für die Reformierung von teerhaltigem Gas wie in Anspruch 1 oder 2 beansprucht, wobei der Katalysator so hergestellt wird, dass der hergestellte Katalysator für die Reformierung von teerhaltigem Gas einen Nickelgehalt von 1 bis 50 Massen-%, einen Magnesiumgehalt von 5 bis 45 Massen-% und einen Aluminiumoxidgehalt von 20 bis 80 Massen-% aufweist.

4. Das Verfahren zur Herstellung eines Katalysators für die Reformierung von teerhaltigem Gas wie in Anspruch 1 oder 2 beansprucht, wobei der Katalysator so hergestellt wird, dass der hergestellte Katalysator für die Reformierung von teerhaltigem Gas einen Nickelgehalt von 1 bis 35 Massen-%, einen Magnesiumgehalt von 10 bis 25 Massen-% und einen Aluminiumoxidgehalt von 20 bis 80 Massen-% aufweist.

5. Ein Verfahren, umfassend die Schritte:

Herstellen eines Katalysators für die Reformierung von teerhaltigem Gas nach dem Herstellungsverfahren wie in einem der Ansprüche 1 bis 4 beansprucht, und

Reformieren von teerhaltigem Gas unter Verwendung des Katalysators für die Reformierung von teerhaltigem Gas.

6. Das Verfahren wie in Anspruch 5 beansprucht, wobei das Reformieren des teerhaltigen Gases in Gegenwart des Katalysators für die Reformierung von teerhaltigem Gas oder in Gegenwart des Katalysators nach einer Reduktion durchgeführt wird, während Wasserstoff, Kohlendioxid und Wasserdampf in einem bei einer Pyrolyse eines kohlenstoffhaltigen Ausgangsmaterials erzeugten teerhaltigen Gases mit dem Teer in dem teerhaltigen Gas in Kontakt gebracht werden, um dadurch den Teer zu reformieren und zu vergasen.

7. Das Verfahren wie in Anspruch 5 oder 6 beansprucht, wobei das bei der Pyrolyse erzeugte teerhaltige Gas mit mindestens einem aus Wasserstoff, Kohlendioxid und Wasserdampf, welche von außen eingebracht werden, in Kontakt gebracht wird, um dadurch das teerhaltige Gas zu reformieren und zu vergasen.

8. Das Verfahren wie in einem der Ansprüche 5 bis 7 beansprucht, wobei das teerhaltige Gas ein teerhaltiges Gas ist, das 20 ppm oder mehr an Schwefelwasserstoff enthält.

9. Das Verfahren wie in einem der Ansprüche 6 bis 8 beansprucht, wobei dem mindestens einen aus Wasserstoff, Kohlendioxid und Wasserdampf ferner ein sauerstoffhaltiges Gas zugegeben wird und mit dem teerhaltigen Gas in Kontakt gebracht wird.

10. Das Verfahren wie in einem der Ansprüche 5 bis 9 beansprucht, wobei das teerhaltige Gas ein Trockendestillationsgas ist, das bei der Trockendestillation von Kohle erzeugt wird.

11. Das Verfahren wie in einem der Ansprüche 5 bis 9 beansprucht, wobei das teerhaltige Gas ein Koksofengas ist, das von einem Koksofen abgegeben wird.

12. Das Verfahren wie in einem der Ansprüche 5 bis 9 beansprucht, wobei das teerhaltige Gas ein Trockendestillationsgas aus einer Trockendestillation von mindestens einer aus Biomasse auf Holzbasis und Biomasse auf Basis von Lebensmittelabfällen ist.

13. Das Verfahren wie in einem der Ansprüche 5 bis 12 beansprucht, wobei das teerhaltige Gas mit dem Katalysator für die Reformierung von teerhaltigem Gas bei 600 bis 1.000 °C in Kontakt gebracht wird.

14. Ein Verfahren zur Regenerierung eines Katalysators für die Reformierung von teerhaltigem Gas, wobei, wenn das in einem der Ansprüche 5 bis 13 beanspruchte Verfahren ausgeführt wird und es bei dem Katalysator durch mindestens einer aus Kohlenstoffablagerung und Schwefelvergiftung zu einem Leistungsabfall kommt, der Katalysator mit mindestens einem aus Wasserdampf und Luft in Kontakt gebracht wird, um den Katalysator zu regenerieren.

**Revendications**

1. Procédé de production d'un catalyseur de réformage de gaz contenant du goudron, comprenant :

l'addition d'un agent de précipitation à une solution contenant un composé de nickel et un composé de magnésium pour faire co-précipiter du nickel et du magnésium et produire un précipité,

le séchage et la cuisson dudit précipité pour produire des oxydes de nickel et de magnésium,

l'addition et le mélange (a) d'une poudre d'alumine et d'eau ou (b) d'un sol d'alumine auxdits oxydes pour produire un mélange, et

au moins le séchage et la cuisson dudit mélange pour produire le catalyseur.

2. Procédé de production d'un catalyseur de réformage de gaz contenant du goudron selon la revendication 1, dans lequel le catalyseur est produit en soumettant ledit mélange (i) à un séchage et une cuisson ou (ii) à un séchage, une calcination, un broyage, un façonnage et une cuisson.

3. Procédé de production d'un catalyseur de réformage de gaz contenant du goudron selon la revendication 1 ou 2, dans lequel le catalyseur est produit de sorte que le catalyseur de réformage de gaz contenant du goudron présente une teneur en nickel de 1 à 50 % en masse, une teneur en magnésium de 5 à 45 % en masse et une teneur en

EP 2 236 204 B1
alumine de 20 à 80 % en masse.

**4.** Procédé de production d'un catalyseur de réformage de gaz contenant du goudron selon la revendication 1 ou 2, dans lequel le catalyseur est produit de sorte que le catalyseur de réformage de gaz contenant du goudron produit présente une teneur en nickel de 1 à 35 % en masse, une teneur en magnésium de 10 à 25 % en masse et une teneur en alumine de 20 à 80 % en masse.

**5.** Procédé comprenant les étapes de :

production d'un catalyseur de réformage de gaz contenant du goudron selon le procédé de production selon l'une quelconque des revendications 1 à 4, et de
réformage de gaz contenant du goudron utilisant le catalyseur de réformage de gaz contenant du goudron.

**6.** Procédé selon la revendication 5, dans lequel le réformage du gaz contenant du goudron est réalisé en présence dudit catalyseur de réformage de gaz contenant du goudron ou en présence dudit catalyseur après réduction, alors que de l'hydrogène, du dioxyde de carbone et de la vapeur d'eau dans un gaz contenant du goudron produit par une pyrolyse d'une matière brute carbonée sont mis en contact avec le goudron dans ledit gaz contenant du goudron, pour réformer et gazéifier par-là le goudron.

**7.** Procédé selon la revendication 5 ou 6, dans lequel ledit gaz contenant du goudron produit par la pyrolyse est mis en contact avec au moins un parmi l'hydrogène, le dioxyde de carbone et la vapeur d'eau introduit à partir de l'extérieur pour réformer et gazéifier par-là ledit gaz contenant du goudron.

**8.** Procédé selon l'une quelconque des revendications 5 à 7, dans lequel ledit gaz contenant du goudron est un gaz contenant du goudron contenant 20 ppm ou plus de sulfure d'hydrogène.

**9.** Procédé selon l'une quelconque des revendications 6 à 8, dans lequel ledit au moins un parmi l'hydrogène, le dioxyde de carbone et la vapeur d'eau est de plus ajouté avec un gaz contenant de l'oxygène et mis en contact avec le gaz contenant du goudron.

**10.** Procédé selon l'une quelconque des revendications 5 à 9, dans lequel ledit gaz contenant du goudron est un gaz de distillation à sec produit lors de la distillation à sec de charbon.

**11.** Procédé selon l'une quelconque des revendications 5 à 9, dans lequel ledit gaz contenant du goudron est un gaz de haut fourneau déchargé d'un haut fourneau.

**12.** Procédé selon l'une quelconque des revendications 5 à 9, dans lequel ledit gaz contenant du goudron est un gaz de distillation à sec lors de la distillation à sec d'au moins l'une d'une biomasse à base de bois et d'une biomasse à base de déchets alimentaires.

**13.** Procédé selon l'une quelconque des revendications 5 à 12, dans lequel ledit gaz contenant du goudron est mis en contact avec ledit catalyseur de réformage de gaz contenant du goudron à de 600 à 1 000°C.

**14.** Procédé de régénération d'un catalyseur de réformage de gaz contenant du goudron, dans lequel lorsque le procédé selon l'une quelconque des revendications 5 à 13 est mis en pratique et ledit catalyseur est soumis à une dégradation de performance par au moins l'un parmi un dépôt de carbone et un empoisonnement au soufre, ledit catalyseur est mis en contact avec au moins l'un parmi de la vapeur d'eau et de l'air pour régénérer ledit catalyseur.

# Fig.1

# Fig.2

# Fig.3

# Fig.4

LIST OF REFERENCES NUMERALS

1    ascending pipe
2    ammoniacal liquor
3    coke oven
4    dry main
5    material hopper
6    volumetric feeder
7    external heating-type rotary kiln
8    catalystic tower
9    water scrubber
10   oil bubbler
11   induced draft fan
12   flare stack

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 59044346 A
- JP 58076487 A
- JP 8134456 A
- US 5516359 A
- US 200054852 B
- US 200355671 B
- WO 200355671 A
- WO 200400900 A
- WO 504001 A
- JP 2005053972 A
- JP 2007283209 A

### Non-patent literature cited in the description

- **F. BASILE et al.** *Stud. Surf. Sci. Catal.,* 1998, vol. 119